Europäisches Patentamt

European Patent Office

Office européen des brevets

(19)

(11) **EP 1 517 940 B1**

(12) **EUROPÄISCHE PATENTSCHRIFT**

(45) Veröffentlichungstag und Bekanntmachung des Hinweises auf die Patenterteilung:
**14.12.2005 Patentblatt 2005/50**

(51) Int Cl.⁷: $C08G\ 65/26$, $B01J\ 27/26$

(21) Anmeldenummer: 03760639.9

(22) Anmeldetag: **18.06.2003**

(86) Internationale Anmeldenummer:
**PCT/EP2003/006410**

(87) Internationale Veröffentlichungsnummer:
**WO 2004/000913 (31.12.2003 Gazette 2004/01)**

(54) **VERFAHREN ZU HERSTELLUNG VON DMC-KATALYSATOREN**

METHOD FOR THE PRODUCTION OF DMC CATALYSTS

PROCEDE DE PRODUCTION DE CATALYSEURS DMC

(84) Benannte Vertragsstaaten:
**AT BE BG CH CY CZ DE DK EE ES FI FR GB GR HU IE IT LI LU MC NL PT RO SE SI SK TR**

(30) Priorität: **24.06.2002 DE 10228254**

(43) Veröffentlichungstag der Anmeldung:
**30.03.2005 Patentblatt 2005/13**

(73) Patentinhaber: **BASF Aktiengesellschaft
67056 Ludwigshafen (DE)**

(72) Erfinder:
• **BOHRES, Edward
  68161 Mannheim (DE)**

• **FRANKE, Dirk
  67134 Birkenheide (DE)**
• **STÖSSER, Michael
  67141 Neuhofen (DE)**
• **RUPPEL, Raimund
  01099 Dresden (DE)**
• **BAUM, Eva
  01987 Schwarzheide (DE)**
• **HARRE, Kathrin
  01109 Dresden (DE)**

(56) Entgegenhaltungen:
  **WO-A-01/64772        WO-A-02/42356
  WO-A-03/042280**

**Beschreibung**

Die Erfindung betrifft ein Verfahren zur Herstellung von Doppelmetallcyanid - Katalysatoren.

Polyetheralkohole sind wichtige Einsatzstoffe bei der Herstellung von Polyurethanen. Ihre Herstellung erfolgt zumeist durch katalytische Anlagerung von niederen Alkylenoxiden, insbesondere Ethylenoxid und/oder Propylenoxid, an H-funktionelle Startsubstanzen.

Als Katalysatoren werden zumeist lösliche basische Metallhydroxide oder Salze eingesetzt, wobei Kaliumhydroxid die größte praktische Bedeutung hat. Nachteilig bei der Verwendung von Kaliumhydroxid als Katalysator ist vor allem, daß bei der Herstellung von hochmolekularen Polyetheralkoholen zur Bildung von ungesättigten Nebenprodukten kommt, welche die Funktionalität der Polyetheralkohole herabsetzen und sich bei der Herstellung von Polyurethanen sehr nachteilig bemerkbar machen.

Zur Senkung des Gehaltes an ungesättigten Anteilen in den Polyetheralkoholen und zur Erhöhung der Reaktionsgeschwindigkeit bei der Anlagerung von Propylenoxid wird vorgeschlagen, als Katalysatoren Multi-, vorzugsweise Doppelmetallcyanidverbindungen, häufig auch als DMC-Katalysatoren bezeichnet, einzusetzen. Es gibt eine große Zahl von Veröffentlichungen, in denen derartige Verbindungen beschrieben wurden. Ihre Herstellung erfolgt üblicherweise, indem Lösungen von Metallsalzen, zumeist Zinkchlorid, mit Lösungen von Alkali- oder Erdalkalimetallcyanometallaten, wie Kaliumhexacyanocobalt, oder Cyanometallatsäuren, umgesetzt werden. Zur entstandenen Fällungssuspension wird im Normalfall sofort nach dem Fällungsvorgang eine wassermischbare, ein oder mehrere Heteroatome enthaltende Komponente zugegeben. Diese Komponente kann bereits in einer oder in beiden Eduktlösungen vorhanden sein. Die wassermischbare, Heteroatome enthaltende Komponente kann vorzugsweise ein Ether, Polyether, Alkohol, Keton oder eine Mischung aus mindestens zwei der genannten Verbindungen sein. Derartige Verfahren sind häufig beschrieben, beispielsweise in US-A 3 278 457, US-A-3 278 458, US-A-3 278 459, US-A-3 427 256.

Obwohl Multimetallcyanidverbindungen eine sehr hohe katalytische Aktivität aufweisen und die Anlagerung der Alkylenoxide mit einer sehr hohen Reaktionsgeschwindigkeit abläuft, sind sie zumeist nicht in der Lage, Alkylenoxide direkt an niedermolekulare Startsubstanzen anzulagern. Unter niedermolekularen Startsubstanzen werden insbesondere Alkohole mit einem Molekulargewicht im Bereich zwischen 62 und 400 g/mol verstanden. Beispiele sind Glyzerin, Ethylenglykol, Propylenglykol, Trimethylolpropan, Pentaerythrit, Diethylenglykol oder Butandiol verstanden. Zumeist kommt es bei der Verwendung dieser Verbindungen zu einer deutlichen Verzögerung beim Reaktionsstart, der sogenannten Induktionsperiode. Dies kann in großtechnischen Anlagen zu gefährlichen Betriebszuständen führen.

Eine Möglichkeit, dieses Problem zu lösen, ist eine deutliche Erhöhung der Menge des eingesetzten Katalysators. Dies würde allerdings die Wirtschaftlichkeit des Verfahrens beeinträchtigen.

Bei einer weiteren Möglichkeit, dieses Problem umzugehen, werden bei der Verwendung von Multimetallcyanidverbindungen als Startsubstanz zumeist Umsetzungsprodukte von niedermolekularen Alkoholen mit Alkylenoxiden eingesetzt, die ein Molekulargewicht im Bereich zwischen 400 und 1000 g/mol aufweisen. Derartige Zwischenprodukte reagieren ohne Induktionsperiode mit den Alkylenoxiden. Die Herstellung dieser Zwischenprodukte erfolgt zumeist unter Verwendung von Alkalihydroxiden als Katalysatoren. Da Alkalihydroxide gegenüber Multimetallcyanidverbindungen als Katalysatorgifte wirken, müssen die Zwischenprodukte aufwendig gereinigt werden.

Eine weitere Möglichkeit, dieses Problem zu umgehen, ist die kontinuierliche Zugabe von den als Startsubstanz verwendeten niedermolekularen Alkoholen zum Reaktionsgemisch während der Polymerisation, wie beispielsweise in WO 98/03571 und WO 97/29146 beschrieben. Diese Art der Verfahrensführung engt jedoch die Möglichkeiten, den Kettenaufbau der Polyetheralkohole zu variieren, ein.

Aufgabe der Erfindung war es, ein Verfahren zur Herstellung von Polyetheralkoholen durch Anlagerung von Alkylenoxiden an H-funktionelle Startsubstanzen unter Verwendung von Multimetallcyanidverbindungen als Katalysatoren zu entwickeln, bei dem es möglich ist, die Alkylenoxide direkt an die H-funktionelle Startsubstanzen, insbesondere Alkohole mit mindestens zwei Hydroxylgruppen, anzulagern, ohne daß es zu einer Verzögerung beim Anspringen der Reaktion kommt. Dabei soll das Verfahren einfach und ohne zusätzliche Verfahrensschritte ablaufen. Die Menge des eingesetzten Katalysators sollte dabei unter 1000 ppm, vorzugsweise unter 500 ppm, bezogen auf den Polyetheralkohol, liegen.

Überraschenderweise wurde gefunden, daß Multimetallcyanidverbindungen, die durch eine spezielle Abfolge von Verfahrensschritten hergestellt wurden, auch bei Einsatz geringer Mengen die Anlagerung von Alkylenoxiden an niedermolekulare, vorzugsweise monomere H-funktionelle Startsubstanzen ermöglichen, ohne daß eine signifikante Induktionsperiode auftritt.

Gegenstand der Erfindung ist ein Verfahren zur Herstellung von Doppelmetallcyanid-Katalysatoren umfassend die Schritte

a) Zugabe einer Metallsalzlösung der allgemeinen Formel $M^1{}_g X_n$, wobei $M^1$, X, g und n die unten angegebene Bedeutung besitzen, zu einer Cyanometallatlösung bei einer spezifischen Rührleistung $\varepsilon$ im Bereich zwischen $\varepsilon$ = 0,05 bis 10 W/l, bevorzugt 0,4 bis 4 W/l, einer Temperatur im Bereich von 0°C bis 100°C, bevorzugt 20°C bis 60°C und einer Zugabezeit von 5 bis 120 Minuten,

b) Verringerung der spezifischen Rührleistung ε auf einen Wert zwischen 0,03 bis 0,8 und dabei Zugabe eines oberflächenaktiven Mittels,

c) Erwärmen der Lösung bei Rühren mit einer spezifischen Rührleistung ε von 0,03 bis 0,8 W/l, bis zu einer Temperatur von höchstens 100°C, bevorzugt im Bereich zwischen 55°C und 75°C,

d) Zugabe weiterer Metallsalzlösung bei Rühren mit einer spezifischen Rührleistung ε von 0,03 bis 0,8 W/l

e) Mit dem Beginn der Leitfähigkeitssenkung Dispergierung des Feststoffs, beispielsweise durch Rühren unter Erhöhung der spezifischen Rührleistung ε von > 0,7 W/l oder durch den Einbau eines Umpumpkreises mit entsprechender Pumpe oder eines Dissolvers,

f) Rühren mit der spezifischen Rührleistung ε von Schritt e), bis die Leitfähigkeit bzw. der pH-Wert konstant bleiben,

g) Abtrennung der Multimetallcyanidverbindung und Waschen mit Wasser und gegebenenfalls

h) Trocknung des Katalysators.

Das Zwischenprodukt nach Schritt a) hat zumeist eine Leitfähigkeit: von etwa 0,7 mS/cm und einen pH-Wert von etwa 3,0, nach Schritt d) zumeist eine Leitfähigkeit von etwa 3,7 mS/cm und einen pH-Wert von etwa 4,0 und nach Schritt f) eine Leitfähigkeit: von etwa 0,8 mS/cm und einen pH-Wert von etwa 3,1.

Es ist möglich, daß mindestens einer der Schritte a) bis f) in Gegenwart mindestens eines organischen Liganden und/oder eines organischen Zusatzstoffs durchgeführt wird. Auf diese Verbindungen wird weiter unter näher eingegangen.

Der Begriff spezifische Rührleistung ε ist dem Fachmann bekannt und kann wie folgt definiert werden (M. Zogg; Einführung in die Mechanische Verfahrenstechnik., B.B. Teubner Stuttgart):

$$e = Ne * r*n^3*d^5 / V,$$

wobei Ne die Leistungskennzahl des Rührers, ρ die Dichte des gerührten Mediums, n die Rührerdrehzahl, d der Rührerdurchmesser, V das Volumen der Flüssigkeit ist.

Die in Schritt b) zugegebenen oberflächenaktiven Mittel werden zumeist in einer Menge im Bereich zwischen 15 und 50 Gew.-%, vorzugsweise in einer Menge von etwa 30 Gew.-%, jeweils bezogen auf das theoretische Gewicht des DMC-Katalysators, zugegeben. Sie dienen insbesondere der Einstellung der Morphologie des DMC-Katalysators und werden zumeist, bis auf mitunter im Katalysator verbleibende geringe Restmengen, während des Waschens aus dem Katalysator entfernt. Prinzipiell ist es möglich, auch größere Mengen an oberflächenaktiven Verbindungen einzusetzen. Dies würde jedoch zu einer Verteuerung der Katalysatorherstellung führen, ohne daß es zu signifikanten Verbesserungen der Eigenschaften des DMC-Katalysators führt.

Unter oberflächeaktiven Mitteln sind solche Verbindungen zu verstehen, die die Oberflächenspannung von Wasser senken. Oberflächenaktive Mittel verfügen über einen charakteristischen Aufbau und weisen mindestens eine hydrophile und eine hydrophobe funktionelle Gruppe auf. Bei den hydrophilen Anteilen des Moleküls handelt es sich meist um polare funktionelle Gruppen ($-COO-$, $-OSO_3-$, $-SO_3-$), während die hydrophoben Teile in der Regel unpolare Kohlenwasserstoff-Reste darstellen.

Insbesondere werden nichtionische und/oder polymere Tenside verwendet. Aus dieser Gruppe ausgewählt sind insbesondere Fettalkoholalkoxylate, Coblockpolymere verschiedener Epoxide mit unterschiedlicher Hydrophilie, Rizinusölalkoxylate oder Coblockpolymere aus Epoxiden und anderen Monomeren, wie Acrylsäure oder Methacrylsäure sein. Die verwendeten Substanzen sollten eine mäßige bis gute Wasserlöslichkeit besitzen.

Die zur Herstellung der DMC-Katalysatoren als oberflächenaktive Mittel eingesetzten Fettalkoholalkoxylate sind herstellbar durch Umsetzung eines Fettalkohols, vorzugsweise mit 8-36 Kohlenstoffatomen, insbesondere 10-18 Kohlenstoffen, mit Ethylenoxid, Propylenoxid und/oder Butylenoxid. Der Polyetherteil des erfindungsgemäß verwendeten Fettalkoholalkoxylats kann dabei aus reinen Ethylenoxid-, Propylenoxid- oder Butylenoxid-Polyethern bestehen. Ferner sind auch Copolymere aus zwei oder drei verschiedenen Alkylenoxiden oder Coblockpolymere aus zwei oder drei verschiedenen Alkylenoxiden möglich. Fettalkoholalkoxylate, die reine Polyetherketten besitzen sind z.B. Lutensol® AO-Marken der BASF-AG. Fettalkoholalkoxylate mit Coblockpolymeren als Polyetherteil sind Plurafac® LF-Marken der BASF AG. Besonders bevorzugt bestehen die Polyetherketten aus 2 bis 50, insbesondere aus 3-15 Alkylenoxideinheiten.

Coblockpolymere als Tenside enthalten zwei verschiedene Polyetherblöcke, die sich in ihrer Hydrophilie unterscheiden. Erfindungsgemäße verwendbare Coblockpolymere können aus Ethylenoxid und Propylenoxid bestehen (Pluronic®-Marken, BASF AG). Die Wasserlöslichkeit wird dabei über die Längen der verschiedenen Blöcke gesteuert. Die Molmassen bewegen sich im Bereich von 500 Da bis 20000 Da, bevorzugt von 1000 Da bis 6000 Da, und insbesondere 1500 bis 4000 Da. Bei den Ethylenoxid/Propylenoxid-Copolymeren beträgt der Ethylenoxid-Anteil von 5 bis 50 Gew.-% und der Propylenoxid-Anteil von 50 bis 95 Gew.-%.

Copolymere aus Alkylenoxid mit anderen Monomeren haben bevorzugt Ethylenoxidblöcke. Als andere Monomere können beispielsweise Butylmethacrylat (PBMA/PEO BE1010 / BE1030, Fa. Th. Goldschmidt), Methylmethacrylat (PMMA/PEO ME1010 / ME1030, Fa. Th. Goldschmidt) oder Methacrylsäure sein (EA-3007, Fa. Th. Goldschmidt).

Die Doppelmetallcyanid-Katalysatoren haben die allgemeine Formel (I)

$$M^1{}_a[M^2(CN)_b(A)_c]_d \cdot fM^1{}_g X_n \cdot h(H_2O)\ eL \cdot kP \tag{I}$$

wobei

$M^1$   ein Metallion, ausgewählt aus der Gruppe, enthaltend $Zn^{2+}$, $Fe^{2+}$, $Fe^{3+}$, $Co^{3+}$, $Ni^{2+}$, $Mn^{2+}$, $CO^{2+}$, $Sn^{2+}$, $Sn^{4+}$, $Pb^{2+}$, $Mo^{4+}$, $Mo^{6+}$, $Al^{3+}$, $V^{4+}$, $V^{5+}$, $Sr^{2+}$, $W^{4+}$, $W^{6+}$, $Cr^{2+}$, $Cr^{3+}$, $Cd^{2+}$, $Cu^{2+}$, $La^{3+}$, $Ce^{3+}$, $Ce^{4+}$, $Eu^{3+}$, $Mg^{2+}$, $Ti^{3+}$, $Ti^{4+}$, $Ag^+$, $Rh^{2+}$, $Ru^{2+}$, $Ru^{3+}$

$M^2$   ein Metallion, ausgewählt aus der Gruppe, enthaltend $Fe^{2+}$, $Fe^{3+}$, $Co^{2+}$, $Co^{3+}$, $Mn^{2+}$, $Mn^{3+}$, $Ni^{2+}$ $V^{4+}$, $V^{5+}$, $Cr^{2+}$, $Cr^{3+}$, $Rh^{3+}$, $Ru^{2+}$, $Ir^{3+}$

bedeuten und $M^1$ und $M^2$ verschieden sind,

A   ein Anion, ausgewählt aus der Gruppe, enthaltend Halogenid, Hydroxyd, Sulfat, Hydrogensulfat, Carbonat, Hydrogencarbonat, Cyanid, Thiocyanat, Isocyanat, Cyanat, Carboxylat, Oxalat oder Nitrat, Nitrosyl, Phosphat, Hydrogenphosphat, Dihydrogenphosphat, sowie die ungeladenen Spezies CO, $H_2O$ und NO,

X   ein Anion, ausgewählt aus der Gruppe, enthaltend Halogenid, Hydroxyd, Sulfat, Hydrogensulfat, Carbonat, Hydrogencarbonat, Cyanid, Thiocyanat, Isocyanat, Cyanat, Carboxylat, Oxalat, Nitrat oder Nitrit ($NO_2$-),

L   ein mit Wasser mischbarer Ligand, ausgewählt aus der Gruppe, enthaltend Alkohole Aldehyde, Ketone, Ether, Polyether, Ester, Polyester, Polycarbonat, Harnstoffe, Amide, Nitrile, und Sulfide, Amine, Phosphide Phosphite, Phosphane, Phosphonate, Phophate oder deren Mischungen,

P   ein von L verschiedener organischer Zusatzstoff, ausgewählt aus der Gruppe, enthaltend Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure und Maleinsäureanhydridcopolymer, Hydroxyethylcellulose, Polyacetate, ionische oberflächen- und grenzflächenaktive Verbindungen, Gallensäure oder deren Salze, Ester oder Amide, Carbonsäureester mehrwertiger Alkohole und Glycoside,

sowie

a, b, d, g und n ganze oder gebrochene Zahlen größer null,

c, f, e, h und k ganze oder gebrochene Zahlen größer gleich null sind,

wobei

a, b, c, und d, sowie g und n so ausgewählt sind, dass die Elektroneutralität gewährleistet ist,

ferner dürfen f und k nur null sein, wenn c ungleich null ist und A ausschließlich Carboxylat, Oxalat oder Nitrat ist.

Das Carboxylat ist insbesondere Acetat.

Diese Katalysatoren können kristallin oder amorph sein. Für den Fall, dass k gleich null ist, sind kristalline Doppelmetallcyanidverbindungen bevorzugt. Im Fall, dass k größer null ist, sind sowohl kristalline, teilkristalline, als auch substantiell amorphe Katalysatoren bevorzugt.

Bei dem organischen Zusatzstoff kann es sich auch um die oberflächenaktive Verbindung handeln.

Von den erfindungsgemäßen Katalysatoren gibt es verschiedene bevorzugte Ausführungsformen.

Eine bevorzugte Ausführungsform sind Katalysatoren der Formel (I), bei denen k größer null ist.

Der bevorzugte Katalysator enthält dann:

a) mindestens eine Multimetallcyanidverbindung
b) mindestens einen organischen Liganden
c) mindestens einen organischen Zusatzstoff P.

Bei einer anderen bevorzugten Ausführungsform ist k gleich null, optional e auch gleich null und X ist ausschließlich Carboxylat, bevorzugt Formiat, Acetat und Propionat. Bei dieser Ausführungsform sind die Multimetallcyanidverbindungen vorzugsweise kristallin.

Besonders geeignete Liganden werden in der Anmeldung WO 01/03830 beschrieben. Derartige Katalysatoren werden mit organischen Sulfonen der allgemeinen Formel $R-S(O)_2-R$ oder Sulfoxiden der allgemeinen Formel $R-S(O)-R$, als organisches komplexierendes Agens hergestellt. So hergestellte DMC-Katalysatoren weisen besonders kurze Induktionszeiten auf und führen zu einer moderaten Exothermie bei der Polymerisation der Alkylenoxide.

In einer besonders vorteilhaften Ausführungsform des erfindungsgemäßen Verfahrens werden als Liganden Nitrile, insbesondere Acetonitril, verwendet. Derartige Katalysatoren sind besonders aktiv und haben eine sehr kurze Induktionsperiode. Sie können bevorzugt zur Anlagerung von Alkylenoxiden an niedermolekulare Starter, beispielsweise Glykole, Glycerin oder Trimethylolpropan, verwendet werden.

Der Gehalt der Heteroatome enthaltenden Liganden in der nach der Fällung entstandenen Suspension sollte 1 bis 60 Gew.-%, vorzugsweise 5 bis 40 Gew.-%, insbesondere 10 bis 30 Gew.-% betragen.

Bei einer besonders bevorzugten Ausführungsform der Erfindung sind die Multimetallcyanidverbindungen kristallin und plättchenförmig. Derartige Katalysatoren sind beispielsweise in Wo 00/74843 beschrieben.

Die Herstellung der Katalysatoren erfolgt, wie oben beschrieben, durch Vereinigung einer Metallsalz-Lösung mit einer Cyanometallat-Lösung, die optional sowohl einen organischen Liganden L als auch einen organischen Zusatzstoff P enthalten können, wobei die erfindungsgemäße Abfolge der Verfahrensschritte eingehalten werden muß. Es ist auch möglich, den organischen Liganden und den organische Zusatzstoff nach der Vereinigung der Metallsalz-Lösung mit der Cyanometallat-Lösung bei jedem der erfindungsgemäßen Verfahrensschritte zuzugeben.

Nach der Abtrennung der Multimetallcyanidverbindung in Schritt g) kann diese gewaschen werden. Hierzu wird zumeist Wasser eingesetzt. Es ist möglich, diesem Wasser weiteren Liganden und/oder Zusatzstoff zuzusetzen.

Die so erhaltene Multimetallcyanidverbindung können getrocknet und in dieser Form als Katalysatoren für die Polymerisation von Alkylenoxiden eingesetzt werden.

Der hergestellte Katalysator kann durch Filtration oder Zentrifugieren isoliert und, vorzugsweise bei einer Temperatur im Bereich zwischen 30 bis 200°C vorzugsweise im Vakuum von 100 bis $10^{-3}$ mbar, besonders bevorzugt bei 50°C und 15 mbar, getrocknet werden.

Der getrocknete Katalysator wird dann zermahlen, wie beispielsweise in US 3,829,505 und US 5,714,639 beschrieben. Der Katalysator kann aber auch durch eine Sprühtrocknung oder Gefriertrocknung getrocknet werden, wie beispielsweise in US 5,900,384 beschrieben.

Es ist jedoch auch möglich, den nach der Abtrennung und dem Waschen der Multimetallcyanidverbindungen erhaltenen feuchten Filterkuchen als Katalysator für die Polymerisation von Alkylenoxiden einzusetzen.

Der Einsatz der Multimetallcyanidverbindungen als Katalysator erfolgt in einer bevorzugten Ausführungsform in Form einer Suspension.

Bei dieser Ausführungsform wird der Katalysator in organische oder anorganische Flüssigkeiten, vorzugsweise in der zur Herstellung der Polyetheralkohole verwendeten Starterverbindung, suspendiert. Diese Suspendierung erfolgt in geeigneten Apparaten wie zum Beispiel Ultraturrax, Homogenisatoren oder Rührwerksmühlen unter Eintrag einer sehr hohen Scherenergie. Eine derartige Verfahrensweise ist beispielsweise beschrieben in WO 00/74843.

Die DMC-Katalysatoren können auch auf Träger aufgebracht werden, wie beispielsweise in WO 01/04180 für Polycarbonsäuren und in WO 01/04177 für Zeolithe beschrieben wird. Dadurch kann eine einfache Abtrennung des Katalysators vom Polyetheralkohol erreicht werden.

Als Metallsalze werden für die Herstellung der erfindungsgemäßen Multimetallcyanidverbindungen zumeist solche der allgemeinen Formel (II)

$$M^1_g X_n \tag{II}$$

eingesetzt, wobei $M^1$ und X die oben genannten Bedeutung haben und g und n so gewählt sind, daß die Elektroneutralität der Verbindung gewährleistet ist.

Dabei können in den Schritten a) und d) die gleichen oder unterschiedliche Metallsalze eingesetzt werden.

Als Cyanometallatverbindungen werden für die Herstellung der erfindungsgemäßen Multimetallcyanidverbindungen zumeist solche der allgemeinen Formel (III)

$$Me_p[M^2(CN)_b]_d \qquad\qquad (III)$$

eingesetzt, wobei $M^2$, b und d die obengenannte Bedeutung haben, Me ein Alkalimetall, ein Erdalkalimetall oder Wasserstoff bedeuten, p eine ganze oder gebrochene Zahl größer Null ist und p, b und d so gewählt sind, daß die Elektroneutralität der Verbindung gewährleistet ist.

In einer bevorzugten Ausführungsform der Erfindung ist Me Wasserstoff, das heißt, es wird die Cyanometallatsäure eingesetzt. Die so hergestellten Multimetallcyanidverbindungen zeichnen sich durch eine besonders gute katalytische Aktivität aus. Außerdem ist ihre Aufarbeitung leichter, da es nicht zu einem störenden Zwangsanfall von Salzen kommt.

Bei einer anderen bevorzugten Ausführungsform der Katalysatoren sind f, e und k ungleich Null. Diese Multimetallcyanidverbindungen enthalten einen mit Wasser mischbaren organischen Liganden, vorzugsweise in einer Menge von 0,5 bis 30 Gew.-%, bezogen auf die Multimetallcyanidverbindung gemäß Formel (I), und einen organischen Zusatzstoff, vorzugsweise in einer Menge von 5 bis 80 Gew.-%, bezogen auf die Multimetallcyanidverbindung gemäß Formel (I).

Wie beschreiben, können die nach dem erfindungsgemäßen Verfahren hergestellten Multimetallcyanidverbindungen als Katalysatoren für die Polymerisation von Alkylenoxiden eingesetzt werden.

Die Herstellung von Polyetheralkoholen erfolgt, indem man Alkylenoxide unter Verwendung der Katalysatoren an H-funktionelle Startsubstanzen anlagert.

Als Alkylenoxide können alle bekannten Alkylenoxide verwendet werden, beispielsweise Ethylenoxid, Propylenoxid, Butylenoxid und/oder Styroloxid. Insbesondere werden als Alkylenoxide Ethylenoxid, Propylenoxid und Mischungen aus den genannten Verbindungen eingesetzt.

Als Startsubstanzen kommen H-funktionelle Verbindungen zum Einsatz. Insbesondere werden Alkohole mit einer Funktionalität von 1 bis 8, vorzugsweise 2 bis 8, eingesetzt. Zur Herstellung von Polyetheralkoholen, die für Polyurethan-Weichschaumstoffe eingesetzt werden, kommen als Startsubstanzen insbesondere Alkohole mit einer Funktionalität von 2 bis 4, insbesondere von 2 und 3, zum Einsatz. Beispiele sind Ethylenglykol, Propylenglykol, Glyzerin, Trimethylolpropan, Pentaerythrit. Bei der Anlagerung der Alkylenoxide mittels DMC-Katalysatoren ist es vorteilhaft, zusammen mit oder an Stelle von den genannten Alkoholen deren Umsetzungsprodukte mit Alkylenoxiden, insbesondere Propylenoxid, einzusetzen. Derartige Verbindungen haben vorzugsweise eine Molmasse bis 500 g/mol. Die Anlagerung der Alkylenoxide bei der Herstellung dieser Umsetzungsprodukte kann mit beliebigen Katalysatoren erfolgen, beispielsweise mit basischen Katalysatoren. Die Polyetheralkohole für die Herstellung von Polyurethan-Weichschaumstoffen haben zumeist eine Hydroxylzahl im Bereich zwischen 20 und 100 mg KOH/g.

Die Anlagerung der Alkylenoxide bei der Herstellung der für das Verfahren eingesetzten Polyetheralkohole kann nach den bekannten Verfahren erfolgen. So ist es möglich, daß die Polyetheralkohole nur ein Alkylenoxid enthalten. Bei Verwendung von mehreren Alkylenoxiden ist eine sogenannte blockweise Anlagerung, bei der die Alkylenoxide einzeln nacheinander angelagert werden, oder eine sogenannte statistische Anlagerung, bei der die Alkylenoxide gemeinsam zudosiert werden, möglich. Es ist auch möglich, bei der Herstellung der Polyetheralkohole sowohl blockweise als auch statistische Abschnitte in die Polyetherkette einzubauen.

Vorzugsweise werden zur Herstellung von Polyurethan-Blockweichschaumstoffen Polyetheralkohole mit einem hohen Gehalt an sekundären Hydroxylgruppen und einem Gehalt an Ethylenoxideinheiten in der Polyetherkette von maximal 30 Gew.-%, bezogen auf das Gewicht des Polyetheralkohols, verwendet. Vorzugsweise haben diese Polyetheralkohole am Kettenende einen Propylenoxidblock. Für die Herstellung von Polyurethan-Formweichschaumstoffen werden insbesondere Polyetheralkohole mit einem hohen Gehalt an primären Hydroxylgruppen und einem Ethylenoxid-Endblock in einer Menge von < 20 Gew.-%, bezogen auf das Gewicht des Polyetheralkohols, verwendet.

Die Anlagerung der Alkylenoxide erfolgt bei den dafür üblichen Bedingungen, wie Temperaturen im Bereich von 60 bis 180°C, bevorzugt zwischen 90 bis 140°C, insbesondere zwischen 100 bis 130°C und Drücken im Bereich von 0 bis 20 bar, bevorzugt im Bereich von 0 bis 10 bar und insbesondere im Bereich von 0 bis 5 bar. Die Mischung aus Startsubstanz und DMC-Katalysator kann vor Beginn der Alkoxylierung gemäß der Lehre von WO 98/52689 durch Strippen vorbehandelt werden.

Nach Beendigung der Anlagerung der Alkylenoxide wird der Polyetheralkohol nach üblichen Verfahren aufgearbeitet, indem die nicht umgesetzten Alkylenoxide sowie leicht flüchtige Bestandteile entfernt werden, üblicherweise durch Destillation, Wasserdampf- oder Gasstrippen und oder anderen Methoden der Desodorierung. Falls erforderlich, kann auch eine Filtration erfolgen.

Der Katalysator kann nach Abschluß der Anlagerung der Alkylenoxide vom Reaktionsgemisch abgetrennt werden. Es ist jedoch für die meisten Einsatzfälle der Polyetheralkohole, insbesondere bei der Herstellung von Polyurethanen, möglich, ihn im Produkt zu belassen.

Dem fertigen Polyetheralkohol können übliche Stabilisatoren, insbesondere solche gegen thermooxidativen Abbau, in den hierfür üblichen Mengen zugesetzt werden.

Der Katalysator kann dabei in einer Menge von unter 1000 ppm, vorzugsweise unter 500 ppm, insbesondere 200 ppm, eingesetzt werden. Ein Katalysatorgehalt von 10 ppm sollte dabei jedoch nicht unterschritten werden, da ansonsten die Katalyse zumeist nicht ausreichend ist.

Durch die Verwendung der nach dem erfindungsgemäßen Verfahren hergestellten Multimetallcyanidverbindungen können Polyetherole aus niedermolekularen Startsubstanzen, insbesondere Ethylenglykol, Propylenglykol, Glyzerin, Trimethylolpropan, Pentaerythrit und Mischungen daraus, mit geringer Katalysatorkonzentration und mit verbesserten Eigenschaften hergestellt werden. Es kommt auch bei sehr geringen Konzentrationen des Katalysators zu keiner Induktionsperiode am Beginn der Polymerisation.

Die unter Verwendung der DMC-Katalysatoren hergestellten Polyetheralkohole werden vorzugsweise zur Herstellung von Polyurethanen, insbesondere Polyurethanschaumstoffen und insbesondere Polyurethan-Weichschaumstoffen eingesetzt. Die Herstellung der Polyurethane erfolgt dabei durch Umsetzung der Polyetheralkohole mit Polyisocyanaten in Gegenwart von Katalysatoren, Treibmitteln und gegebenenfalls anderen üblichen Hilfs- und/oder Zusatzstoffen.

Beispiele

Beispiel 1.

In einem Rührkessel mit einem Volumen von 8001, ausgestattet mit einer Schrägblattturbine, Tauchrohr für die Dosierung, pH-Elektrode, Leitfähigkeitmeßzelle und Streulicht-Sonde, wurden 353,9 kg wässrige Hexacyanocobaltsäure (Cobalt-Gehalt: 9g/l Cobalt) vorgelegt und unter Rühren auf 50°C erwärmt. Anschließend wurden unter Rühren (Rührleistung 1 W/l) 215,7 kg wässrige Zinkacetat-Dihydrat-Lösung (Zinkgehalt: 2,5 Gew.-%), welche auf ebenfalls auf 50°C temperiert war, innerhalb von 45 min zugefahren.

Nach der Zugabe wurde eine Rührleistung von 0,4 W/l eingestellt, wobei eine Lösung aus 7,67 kg Pluronic® PE 6200 (BASF AG) in 10 kg Wasser zugegeben wurde. Der Ansatz wurde auf 60°C erhitzt und für zwei Stunden bei dieser Temperatur weiter gerührt. Dann wurden 70,5 kg wässrige Zinkacetat-Dihydrat-Lösung (Zinkgehalt: 2,5 Gew.-%) unter Rühren (Rührenleistung: 0,4W/l) bei 60°C innerhalb 20 min zudosiert. Nach wenigen Minuten fing der Leitfähigkeitswert an zu fallen. Daraufhin wurde der Ansatz mit einer Rührleistung von 1,5W/l weitergerührt.

Die Suspension wurde bei einer Temperatur von 60°C und einer Rührleistung von 1,5 W/l solange nachgerührt bis der pH-Wert von 4,15 auf 3,09 gefallen war und konstant blieb. Die so erhaltene Fällsuspension wurde anschließend mittels einer Filterpresse abfiltriert und in der Filterpresse mit 400 l Wasser gewaschen.

Der wasserfeuchte Filterkuchen wurde bei 50°C unter Vakuum getrocknet.

Beispiel 2

Herstellung von Polyetheralkoholen

In einem 2 l Rührautoklaven wurden 134 g (1 Mol) des Starters Dipropylenglykol zusammen mit 0,18 g des DMC-Katalysators aus Beispiel 1 (200 ppm bezogen auf die Menge des Polyetheralkohols, vorgelegt. Anschließend wurde die Mischung zwei Stunden bei 100°C und 0 bis 10 mbar entwässert, danach mit Stickstoff entspannt und über Nacht bei 100°C gerührt. Anschliessend wird auf 135°C erhitzt und die Alkoxylierung gestartet. Dazu wurde der Druck innerhalb von 30 Minuten unter Zugabe von 50 ml Propylenoxid, das unter Stickstoff-Vordruck stand, auf 4 bar gefahren.

Danach wurde innerhalb von weiteren 30 Minuten der Reaktorinnendruck auf 8 bar gesteigert dabei 250 g Propylenoxid dosiert.

Bei 9 bar und einer Reaktionstemperatur von 135° C wurde nach einer Zeit von ca. 4-5 Stunden eine deutliche Druckabnahme von 9 bar auf 1 bar beobachtet. Danach wurde zwischen 1 und 3 bar und einer Temperatur von 135° C die Restmenge Propylenoxid dosiert mit einer Gesamtmenge an Propylenoxids von 756 g (13,03 Mol). Nach erfolgter Reaktion wurde mit Stickstoff gestrippt und unreagiertes Propylenoxid unter vermindertem Druck (10 mbar) und 100°C abgezogen und über Tiefenfilter filtriert.

Man erhält 886,8 g einer farblosen Flüssigkeit. Dies entspricht 13 Mol Propylenoxid/Mol Starter.

Kennwerte des erhaltenen Polymeren:

| | |
|---|---|
| Polydispersität | 1,053, bestimmt mittels GPC |
| Co (Restgehalt) | 1 ppm |
| Zn Restgehalt) | 3 ppm |
| Hydroxylzahl | 119 mg KOH/g |
| Jodzahl nach Kaufmann | < 1 g Jod/100 g |

Vergleichsbeispiel 1

Katalysatorherstellung

In einem Rührkessel mit einem Volumen von 8001, ausgestattet mit einer Schrägblattturbine, Tauchrohr für die Dosierung, pH-Elektrode, Leitfähigkeitmeßzelle und Streulicht-Sonde, wurden 370 kg wässrige Hexacyanocobaltsäure (Cobalt-Gehalt: 9g/l Cobalt) vorgelegt und unter Rühren auf 50°C erwärmt. Anschließend wurden unter Rühren bei einer Rührleistung von 1 W/l 209,5 kg wässrige Zinkacetat-Dihydrat-Lösung (Zinkgehalt: 2,7 Gew.-%), welche auf ebenfalls auf 50°C temperiert war, innerhalb von 50 min zugefahren.

Anschließend wurden 8 kg des oberflächenaktiven Mittels Pluronic® PE 6200 (BASF AG) und 10,7 kg Wasser unter Rühren zugegeben. Dann wurden 67,5 kg wässrige Zinkacetat-Dihydrat-Lösung (Zinkgehalt: 2,7 Gew.-%) unter Rühren bei einer Rührleistung von 1W/l bei 55°C innerhalb 20 min zudosiert.

Die entstandene Suspension wurde bei 55°C solange nachgerührt, bis der pH-Wert von 3,7 auf 2,7 gefallen war und konstant blieb. Die so erhaltene Fällsuspension wurde anschließend mittels einer Filterpresse abfiltriert und in der Filterpresse mit 400 1 Wasser gewaschen.

Vergleichsbeispiel 2 - Herstellung des Polyetheralkohols

134 g (1 Mol) Dipropylenglykol wurden mit 0,18 g (200 ppm) des Katalysators aus Vergleichsbeispiel 1 versetzt. Dazu gab man 30 g Molsieb (4 A). Die so hergestellte Startermischung wurde 3 h bei 100°C unter Vakuum bei ca. 1 mbar entwässert. Das Vakuum wurde mit Stickstoff gebrochen, Molsieb abfiltriert und die Startermischung in einen 21 Rührreaktor gegeben.

Danach wurde eine Druckprüfung durchgeführt und dreimal mit Stickstoff inertisiert. Anschliessend wurde die Mischung auf 130°C erhitzt. Nach Erreichen dieser Temperatur und einer vorgegebenen Druckrampe von 0,2 bar bis 4 bar wurden, um das Anspringen der Reaktion zu beobachten, 50 g Propylenoxid in den Reaktor zugefahren.

Nach 11 Minuten fiel der Druck im Reaktor auf 3,9 bar, nach 120 Minuten auf 1,8 bar. Es war keine Exothermie zu beobachten. Nach einer weiteren Druckrampe (1,8 bis 5 bar) wurden 102.g Propylenoxid in den Reaktor gefahren. Zunächst stieg die Reaktorinnentemperatur stark an, fiel jedoch nach wenigen Minuten deutlich ab. Nach 120 Minuten war ein Druckabfall auf 4,4 bar zu beobachten, wobei dieser Druck in der Folgezeit konstant blieb. Es war weder Exothermie noch eine weitere PO-Aufnahme erkennbar. Der Versuch wurde abgebrochen.

Vergleichsbeispiel 3

Im einem 21 Rührautoklaven werden 134 g (1 Mol) Dipropylenglykol und 2,22 g des DMC-Katalysators aus Vergleichsbeispiel 1 (entspricht 2500 ppm bezogen auf den Polyetheralkohol) vorgelegt. Es wurde auf 100° C erhitzt und unter vermindertem Druck (< 20 mbar) zwei Stunden bei dieser Temperatur entwässert. Danach wurde das Vakuum mit Stickstoff gebrochen und auf 130° C aufgeheizt. Bei einem Anfangsdruck von 0,3 bar wurden 20 g Propylenoxid dosiert, der Druck stieg dabei auf 2 bar an, nach Druckabfall auf 1,3 bar wurden weitere 50 g PO dosiert. Nach 4 Stunden und einem Reaktorinnendruck von 3,2 bar konnte Exothermie beobachtet werden. Nach weiteren 5 Stunden war die Dosierung (berechnete Menge Propylenoxid) beendet und keine Exothermie mehr erkennbar. Zur Nachreaktion wurde 9 Stunden bei einem Druck von 5 bar und einer Temperatur von 130°C gerührt. Das erhaltene Polypropylenglykol 902,3 g (entspricht 13,2 Mol PO/Mol Starter) war rosa gefärbt. Nach Tiefen-Filtration wurde jedoch ein klares, farbloses Produkt erhalten.

## EP 1 517 940 B1

**Patentansprüche**

1. Verfahren zur Herstellung von Doppelmetallcyanid-Katalysatoren, umfassend die Schritte

   a) Zugabe einer Metallsalzlösung der allgemeinen Formel $M^1_g X_n$, wobei $M^1$ ein Metallion, ausgewählt aus der Gruppe, enthaltend $Zn^{2+}$, $Fe^{2+}$, $Fe^{3+}$, $Co^{3+}$, $Ni^{2+}$, $Mn^{2+}$, $Co^{2+}$, $Sn^{2+}$, $Sn^{4+}$, $Pb^{2+}$, $Mo^{4+}$, $Mo^{6+}$, $Al^{3+}$, $V^{4+}$, $V^{5+}$, $Sr^{2+}$, $W^{4+}$, $W^{6+}$, $Cr^{2+}$, $Cr^{3+}$, $Cd^{2+}$, $Cu^{2+}$, $La^{3+}$, $Ce^{3+}$, $Ce^{4+}$ $Eu^{3+}$, $Mg^{2+}$, $Ti^{3+}$, $Ti^{4+}$, $Ag^+$, $Rh^{2+}$, $Ru^{2+}$, $Ru^{34}$, bedeutet, X ein Anion, ausgewählt aus der Gruppe, enthaltend Halgenid, Hydroxyd, Sulfat, Hydrogensulfat, Carbonat, Hydrogencarbonat, Cyanid, Thiocyanat, Isocyanat, Cyanat, Carboxylat, Oxalat, Nitrat od. Nitrit ($NO_2^-$), bedeutet, und g und n so gewählt sind, dass die Elektroneutralität der Verbindung gewährleistet ist zu einer Cyanometallatlösung bei einer spezifischen Rührleistung $\varepsilon$ im Bereich zwischen $\varepsilon$ = 0,05 bis 10 W/l, bevorzugt 0,4 bis 4 W/l, einer Temperatur im Bereich von 0°C bis 100°C, bevorzugt 20°C bis 60°C und einer Zugabezeit von 5 bis 120 Minuten,
   b) Verringerung der spezifischen Rührleistung $\varepsilon$ auf einen Wert zwischen 0,03 bis 0,8 W/l und dabei Zugabe eines oberflächenaktiven Mittels,
   c) Erwärmen der Lösung bei Rühren mit einer spezifischen Rührleistung $\varepsilon$ von 0,03 bis 0,8 W/l, bis zu einer Temperatur von höchstens 100°C bevorzugt im Bereich zwischen 55°C und 75°C,
   d) Zugabe weiterer Metallsalzlösung bei Rühren mit einer spezifischen Rührleistung $\varepsilon$ von 0,03 bis 0,8 W/l
   e) mit dem Beginn der Leitfähigkeitssenkung Dispergierung des Feststoffs, beispielsweise durch Rühren unter Erhöhung der spezifischen Rührleistung $\varepsilon$ auf > 0,7 W/l oder durch den Einbau eines Umpumpkreises mit entsprechender Pumpe oder eines Dissolvers,
   f) Rühren mit der spezifischen Rührleistung von Schritt e), bis die Leitfähigkeit bzw. der pH-Wert konstant bleibt,
   g) Abtrennung der Multimetallcyanidverbindung und Waschen mit Wasser und gegebenenfalls
   h) Trocknung des Katalysators.

**Claims**

1. A process for preparing double metal cyanide catalysts, comprising the steps:

   a) adding a metal salt solution of the formula $m^1_g X_n$,
      where
   $M^1$ is a metal ion selected from the group comprising $Zn^{2+}$, $Fe^{2+}$, $Fe^{3+}$, $CO^{3+}$, $Ni^{2+}$, $Mn^{2+}$, $CO^{2+}$, $Sn^{2+}$, $Sn^{4+}$, $Pb^{2+}$, $Mo^{4+}$, $Mo^{6+}$, $Al^{3+}$, $V^{4+}$, $V^{5+}$, $Sr^{2+}$, $W^{4+}$, $W^{6+}$, $Cr^{2+}$, $Cr^{3+}$, $Cd^{2+}$, $Cu^{2+}$, $La^{3+}$, $Ce^{3+}$, $Ce^{4+}$, $Eu^{3+}$, $Mg^{2+}$, $Ti^{3+}$, $Ti^{4+}$, $Ag^+$, $Rh^{2+}$, $Ru^{2+}$, $Ru^{3+}$, X is an anion selected from the group consisting of halide, hydroxide, sulfate, hydrogensulfate, carbonate, hydrogencarbonate, cyanide, thiocyanate, isocyanate, cyanate, carboxylate, oxalate, nitrate and nitrite $CNO_2^-$), and g and n are selected so that the compound is electrically neutral, to a cyanometalate solution at a specific stirring power $\varepsilon$ in the range from 0.05 to 10 W/l, preferably from 0.4 to 4 W/l, a temperature in the range from 0°C to 100°C, preferably from 20°C to 60°C, and an addition time of from 5 to 120 minutes,

   b) reducing the specific stirring power $\varepsilon$ to a value in the range from 0.03 to 0.8 W/l and at the same time adding a surface-active agent,

   c) heating the solution while stirring at a specific stirring power $\varepsilon$ of from 0.03 to 0.8 W/l, to a temperature of not more than 100°C, preferably in the range from 55°C to 75°C,

   d) adding further metal salt solution while stirring at a specific stirring power $\varepsilon$ of from 0.03 to 0.8 W/l,

   e) when the conductivity begins to drop, dispersing the solid, for example by stirring while increasing the specific stirring power $\varepsilon$ to > 0.7 W/l or by installation of a pumped circuit with an appropriate pump or by means of a high-speed stirrer,

   f) stirring at the specific stirring power of step e) until the conductivity or the pH remains constant,

   g) separating off the multimetal cyanide compound and washing it with water and, if appropriate,

   h) drying the catalyst.

**Revendications**

1. Procédé de préparation de catalyseurs à base de cyanure doublement métallique, comprenant les étapes

a) d'addition d'une solution de sel métallique de la formule générale $M^1_g X_n$, où $M^1$ représente un ion métallique choisi parmi le groupe contenant $Zn^{2+}$, $Fe^{2+}$, $Fe^{3+}$, $Co^{3+}$, $Ni^{2+}$, $Mn^{2+}$, $Co^{2+}$, $Sn^{2+}$, $Sn^{4+}$, $Pb^{2+}$, $Mo^{4+}$, $Mo^{6+}$, $Al^{3+}$, $V^{4+}$, $V^{5+}$, $Sr^{2+}$, $W^{4,}$ $W^{6+}$, $Cr^{2+}$, $Cr^{3+}$, $Cd^{2+}$, $Cu^{2+}$, $La^{3+}$, $Ce^{3+}$, $Ce^{4+}$, $Eu^{3+}$, $Mg^{2+}$, $Ti^{3+}$, $Ti^{4+}$, $Ag^+$, $Rh^{2+}$, $Ru^{2+}$, $Ru^{3+}$, X est un anion choisi parmi le groupe contenant de l'halogénure, de l'hydroxyde, du sulfate, du bisulfate, du carbonate, du bicarbonate, du cyanure, du thiocyanate, de l'isocyanate, du cyanate, du carboxylate, de l'oxalate, du nitrate ou du nitrite ($NO_2^-$), et g et n sont choisis de façon que la neutralité électronique du composé soit garantie, à une solution de cyanométallate à une puissance d'agitation spécifique $\varepsilon$ dans la gamme de $\varepsilon = 0,05$ à 10 W/l, de préférence de 0,4 à 4 W/l, à une température de l'ordre de 0°C à 100°C, de préférence de 20°C à 60°C, et pendant un temps d'addition de 5 à 120 minutes,

b) de diminution de la puissance d'agitation spécifique $\varepsilon$ à une valeur comprise entre 0,03 et 0,8 W/l et d'addition d'un agent tensioactif,

c) de chauffage de la solution avec agitation à une puissance d'agitation spécifique $\varepsilon$ de 0,03 à 0,8 W/l, jusqu'à une température de maximum 100°C, de préférence dans une gamme comprise entre 55°C et 75°C,

d) d'addition de solution de sel métallique additionnelle avec agitation à une puissance d'agitation spécifique $\varepsilon$ de 0,03 à 0,8 W/l,

e) au commencement de la diminution de conductibilité, de dispersion de la matière solide, par exemple par agitation avec augmentation de la puissance d'agitation spécifique $\varepsilon$ à > 0,7 W/l ou par le montage d'un circuit de pompage avec une pompe correspondante ou d'un dissolveur,

f) d'agitation à la puissance d'agitation spécifique de l'étape e) jusqu'à ce que la conductibilité ou respectivement la valeur de pH reste constante,

g) d'isolement du composé de cyanure multimétallique et de lavage à l'eau et éventuellement

h) de séchage du catalyseur.